# EUROPÄISCHE PATENTSCHRIFT

(11) **EP 1 244 581 B1**
(45) Veröffentlichungstag und Bekanntmachung des Hinweises auf die Patenterteilung: **16.07.2003**
(21) Anmeldenummer: 01911465.1
(22) Anmeldetag: 05.01.2001
(51) Int. Cl.: B60S 1/38

(54) **WISCHVORRICHTUNG ZUM REINIGEN VON SCHEIBEN AN FAHRZEUGEN, INSBESONDERE KRAFTFAHRZEUGEN**
WIPER DEVICE FOR CLEANING THE GLASS PANES OF VEHICLES, ESPECIALLY AUTOMOBILES
DISPOSITIF D'ESSUYAGE PERMETTANT DE NETTOYER DES VITRES DE VEHICULES, NOTAMMENT D'AUTOMOBILES

(30) Priorität: 07.01.2000 DE 10000382; 07.01.2000 DE 10000389; 24.03.2000 DE 10014803
(43) Veröffentlichungstag der Anmeldung: 02.10.2002
(73) Patentinhaber: Valeo Wischersysteme GmbH, 74321 Bietigheim-Bissingen (DE)
(72) Erfinder: EGNER-WALTER, Bruno, 74076 Heilbronn (DE); ROUMEGOUX, Jean-Louis, F-75116 Paris (FR)
(74) Vertreter: Jahn, Wolf-Diethart
(86) Internationale Anmeldenummer: EP0100094
(87) Internationale Veröffentlichungsnummer: WO01049537

(56) Entgegenhaltungen:
- DE-A- 19 739 256
- PATENT ABSTRACTS OF JAPAN vol. 1996, no. 09, 30. September 1996 (1996-09-30) -& JP 08 133022 A (ASMO CO LTD), 28. Mai 1996 (1996-05-28)

## Beschreibung

Die Erfindung bezieht sich auf eine Wischvorrichtung gemäß dem Oberbegriff des Patentanspruchs 1. Eine derartige Wischvorrichtung ist aus der Pantentanmeldung DE-A- 19 739 256 bekannt.

Wischvorrichtungen zum Reinigen von Scheiben an Kraftfahrzeugen sind in unterschiedlichsten Ausführungen bekannt. Bekannt sind dabei speziell auch sogenannte Flachbau-Wischblätter, die im wesentlichen aus einer aus gummielastischem Material gefertigten Wischleiste und aus in seitliche Längsnuten der Wischleiste eingreifenden Tragoder Federschienen bestehen, die mit einem Teil ihrer Breite über einander abgewandte Längsseiten der Wischleiste oder eines Profilabschnittes dieser Wischleiste wegstehen und an den beiden Enden der Wischleiste mit dieser und miteinander über End- oder Verbindungsstücke zu dem Wischblatt verbunden sind (DE-A-197 39 256).

Bekannt ist bei derartigen Flachbau-Wischblättern ferner, die Wischleiste an ihrer der Wischlippe und damit der zu reinigenden Scheibe abgewandten Oberseite als Spoiler zu formen, d.h. mit einer Schrägfläche, deren Ebene im Verwendungsfall mit.der Ebene der Scheibe einen Winkel kleiner als 90° einschließt, oder mit einer entsprechenden konkav gewölbten Schräge auszubilden (DE-A 197 34 843). Nachteilig ist hierbei allein schon das hohe Gewicht dieser bekannten Wischleisten. Außerdem ist durch die erforderliche Anordnung des zu der Wischvorrichtung gehörenden Wischarmes oberhalb des an dem Wischblatt vorgesehenen Spoilers die Bauhöhe der Wischvorrichtung immer noch zu groß und die Adaption von Wischarm und -blatt ist ungünstig gestaltet.

Aufgabe der Erfindung ist es, eine Wischvorrichtung aufzuzeigen, welche die Nachteile der vorgenannten bekannten Wischvorrichtungen vermeidet und bei verringertem Gewicht und insgesamt weiter verringerter Bauhöhe auch die Adaptionsmöglichkeit des Wischblattes zum Wischarm verbessert.

Zur Lösung dieser Aufgabe ist eine Wischvorrichtung entsprechend dem Patentanspruch 1 ausgebildet.

Dadurch, dass sich der an die Oberseite der Wischleiste angeformte Spoiler nur in einem Bereich zwischen den Mitteln zum Befestigen des Wischblattes am Wischarm und einem Ende des Wischblattes erstreckt, erstreckt er sich gewissermaßen nur über etwa die Hälfte der Länge der Wischleiste. Dadurch wird deutlich das Gewicht der Wischleiste verringert. Außerdem kann in dem anderen Bereich, in dem also kein Spoiler an die Oberseite der Wischleiste angeformt ist, das Wischblatt näher an einen über diesem Bereich angeordneten Wischarm herangebracht werden, wodurch insgesamt die Bauhöhe verringert wird. Zusätzlich werden dadurch die Adaptionsmöglichkeiten des Wischblattes zum Wischarm verbessert.

Eine Weiterbildung der Erfindung sieht vor, dass der Spoiler in Wischblattlängsrichtung eine sich ändernde Höhe aufweist, mit der der Spoiler bzw. ein oberer Spoilerrand über die Ebene einer Unterseite der Wischleiste/vorsteht. Dadurch kann das Gewicht der Wischleiste noch um einen weiteren Anteil verringert werden. Dabei kann bei Anwendung einer weiteren Weiterbildung der Erfindung, wonach die Höhe des Spoilers zu dem einen Ende des Wischblattes bzw. der Wischleiste hin abnimmt, neben einer technischen Verbesserung auch noch eine Verbesserung der Wischvorrichtung im Sinne einer ansprechenden Stilistik erreicht werden.

Eine andere Weiterbildung der Erfindung sieht vor, dass der Spoiler eine konstante oder im wesentlichen konstante Höhe besitzt. Das hat den Vorteil, dass der Spoiler eine größere wirksame Windanströmfläche besitzt und die Wischleiste kostengünstiger als Extrusionsteil herstellbar ist.

Eine andere Weiterbildung der Erfindung sieht eine Wischvorrichtung vor, bei welcher der an die die Wischleiste angeformte Spoiler eine erste Spoilerfläche bildet und dass der Wischarm zumindest auf einer Teillänge einen Außenquerschnitt mit wenigstens einer zweiten Spoilerfläche aufweist. Diese erfindungsgemäße Ausbildung, die bei extrem niedriger Bauhöhe der Wischvorrichtung nur eine geringe Anzahl an Einzelteilen erfordert, ermöglicht eine besonders preiswerte Fertigung durch Reduzierung der Teile- und Montagekosten. Die geringe Teilezahl wirkt sich ferner besonders günstig auf die optische Gestaltung von Wischblatt und Wischarm aus, insbesondere auch deswegen, weil nur wenige Kanten und Übergänge vorhanden sind.

Bei der erfindungsgemäßen Ausbildung ist es möglich, die Wischleiste (Wischgummi) und den Wischarm so zu formen, dass sich die Form der Oberseite der Wischleiste und dabei insbesondere auch die Spoilerfläche in der Form bzw. Spoilerfläche des Wischarmes fortsetzen. Bei einer bevorzugten Ausführungsform ist der Wischarm mit seinem einen Ende so mit dem Wischblatt verbunden, dass er das Wischblatt auf einer Teillänge überlappt. Hierdurch ist es auch möglich, die Verbindung zwischen Wischblatt und Wischarm besonders einfach zu gestalten.

Andere Weiterbildungen der erfindungsgemäßen Wischvorrichtung sind Gegenstand der Unteransprüche 8 bis 15 und werden noch in den Ausführungsbeispielen näher erläutert.

Die erfindungsgemäße Wischvorrichtung wird nun im Folgenden anhand der Figuren an Ausführungsbeispielen näher erläutert.

Es zeigen:
- Figur 1: in vereinfachter Darstellung und in Seitenansicht ein Flachbau-Wischblatt mit einseitigem Spoiler;
- Figur 2: einen Schnitt entsprechend der Linie I - I der Figur 1 im Bereich des Spoilers;
- Figur 3: einen Schnitt entsprechend der Linie II - II der Figur 1 außerhalb des Spoilers;
- Figur 4: in sehr vereinfachter Darstellung und in Seitenansicht eine Wischblatt-Wischarm-Anordnung eines Scheibenwischers gemäß der Erfindung;
- Figur 5: einen Schnitt entsprechend der Linie I - I der Figur 4;
- Figur 6: einen Schnitt entsprechend der Linie II - II der Figur 4;
- Figur 7: eine Draufsicht auf die Anordnung der Figur 4

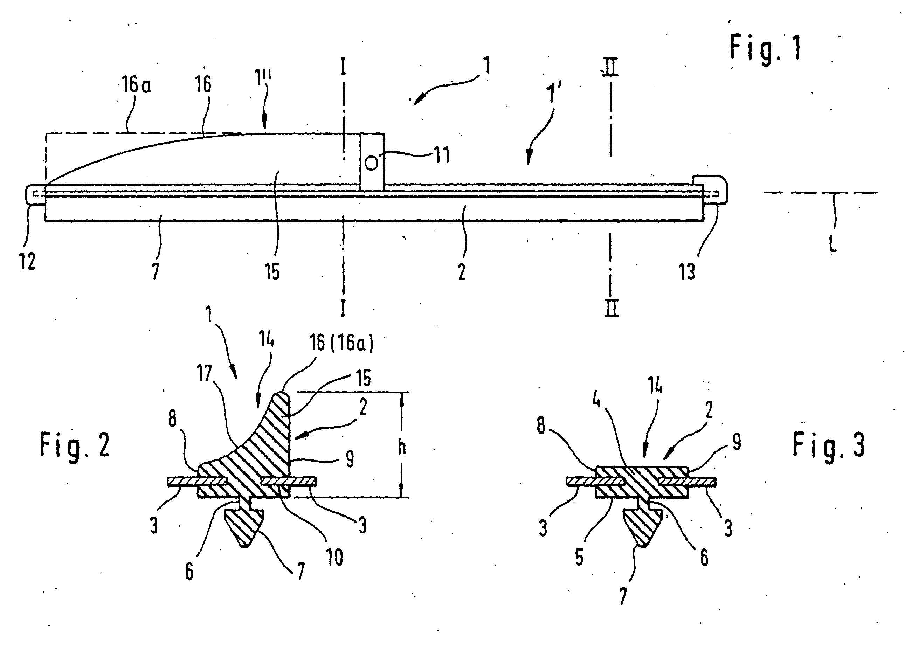

Die Figuren 1 bi 3 zeigen als eine mögliche Ausführungsform der Erfindung ein in diesen Figuren allgemein mit 1 bezeichnetes Wischblatt zur Verwendung in einer Wischvorrichtung. Das Wischblatt ist auf einer Teillänge als "Flachbau-Wischblatt" ausgeführt und besteht in an sich bekannter Weise aus einer Wischleiste 2, die als Profil aus einem gummielastischen Material hergestellt ist, sowie aus zwei die Wischleiste 2 zwischen sich aufnehmenden, flachbandartigen Trag- oder Federschienen 3, die aus einem elastischen Material, vorzugsweise aus Federstahl hergestellt sind und sich ebenso wie die Wischleiste 2 über die ganze Länge des Wischblattes 1 erstrecken.

Das Profil der Wischleiste 2 bildet einen Profilabschnitt 4 mit einer Unterseite 5, an der über einen etwa in der Mitte der Unterseite 5 angeformten Kippsteg 6 die ebenfalls angeformte Wischlippe 7 vorgesehen ist, mit der das Wischblatt im Verwendungsfall gegen die zu reinigende Scheibe anliegt. Kippsteg 6 und Wischlippe 7 erstrecken sich über die gesamte Länge der Wischleiste 2. An zwei, bei der dargestellten Ausführungsform in Ebenen senkrecht zur Ebene der Unterseite 5 liegenden Längsseiten 8 und 9 ist die Wischleiste 2 mit jeweils einer Längsnut 10 versehen, die an diesen Längsseiten sowie an den beiden Enden der Wischleiste 2 offen ist und die in einer gemeinsamen Ebene parallel zur Unterseite 5 liegen. In jeder Längsnut 10 ist jeweils eine Federschiene 3 mit einem Teil ihrer Breite aufgenommen. Jede Tragschiene 3 steht mit dem anderen Teil ihrer Breite aus. der Längsnut 10 über die betreffende Längsseite 8 bzw. 9 vor, und zwar bei der dargestellten Ausführung etwa mit der halben Breite.

In der Mitte des Wischblattes 1 ist an den Federschienen 3 ein Adapter 11 befestigt, über den das Wischblatt 1 mit dem nicht dargestellten Wischarm des Scheibenwischers verbunden ist. Weiterhin sind an den beiden Enden des Wischblattes 1 Abschlussstücke 12 und 13 vorgesehen, die dort die Enden der Federschienen 3 miteinander sowie mit der Wischleiste 2 verbinden.

Wie die Figur 3 zeigt, ist das Profil der Wischleiste 2 im Teilbereich 1' des Wischblattes 1 zwischen dem Adapter 11 und dem einen das Abschlussstück 13 aufweisenden Wischblattende im wesentlichen von dem flachen, bei der dargestellten Ausführungsform rechteckförmigen Profilabschnitt 4 gebildet, wobei die größeren Querschnittsseiten dieses Profilabschnittes von der Unterseite 5 und der gegenüberliegenden Wischleistenoberseite 14 und die beiden kurzen Querschnittsseiten von den dortigen Längsseiten 8 und 9 gebildet sind.

Wie die Figur 2 zeigt, ist der Querschnitt der Wischleiste 2 in dem Teilbereich 1'' zwischen dem Adapter 11 und dem anderen, das Abschlussstück 12 aufweisenden Ende von dem Profilabschnitt 4 und einem angeformten Spoiler 15 gebildet, der an die der Unterseite 5 abgewandte Wischleistenoberseite angeformt ist. Der Spoiler 15 ist weiterhin so ausgebildet, dass die Höhe h dieses Spoilers, d.h. der Abstand, den der sich in Wischblattlängsrichtung L erstreckende Spoilerrand 16 von der Unterseite 5 aufweist, am Adapter 11 am größten ist, und zwar gleich der Höhe des Adapters 11. Zu dem das Abschlussstück 12 aufweisenden Ende des Wischblattes 2 hin nimmt die Höhe h ab.

Grundsätzlich besteht aber, wie in der Figur 1 mit der unterbrochenen Linie 16a angedeutet ist, auch die Möglichkeit, den Spoiler 15 über seine gesamte Länge mit einer im wesentlichen konstanten Höhe h auszubilden.

Der Querschnitt des Spoilers 15 ist dadurch definiert, dass die eine Längsseite 9 in dem Bereich dieses Spoilers eine größere Höhe aufweist, mit der diese Längsseite bis an den Rand 16 bzw. 16a reicht, wobei die Spoilerfläche 17 vom Rand 16 bzw. 16a auf die Höhe der Längsseite 8 abfällt und um eine parallel zur Längserstreckung L der Wischleiste 2 verlaufende Achse konkav gekrümmt ist.

Beider dargestellten Ausführungsform reicht der Spoiler 15 bis unmittelbar an den Adapter 11, was zu einem ansprechenden äußeren Erscheinungsbild führt, insbesondere dann, wenn der Spoiler 15 am Adapter 11 die selbe Höhe h wie dieser Adapter 11 aufweist. Grundsätzlich sind aber auch Ausführungen denkbar, bei denen der Spoiler 15 mit Abstand vom Adapter 11 endet. Bei der dargestellten Ausführungsform ist der Spoiler 15 an seinem dem Adapter 11 benachbarten Ende so ausgeführt, dass ein flächiges Anliegen des Spoilers 15 am Adapter 11 gewährleistet ist.

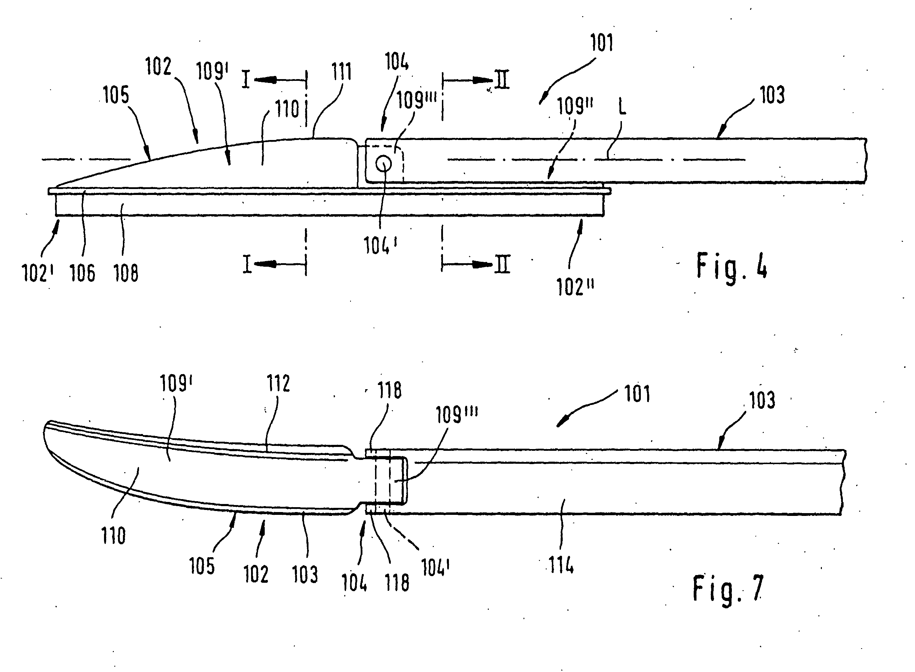

Die in den Figuren 4 bis 7 allgemein mit 101 bezeichnete Wischblatt-Wischarm-Anordnung besteht im wesentlichen aus einem Wischblatt 102 und einem Wischarm 103. An einem Verbindungsbereich 104 ist das Wischblatt 102 etwa in der Wischblattmitte mit einem Ende des Wischarms 103 verbunden, und zwar um einen begrenzten Schwenkwinkel um die Achse eines Verbindungs- oder Gelenkbolzens 104' schwenkbar, der mit dieser Achse senkrecht zur Längserstreckung des Wischblattes 102 und des Wischarms 103 sowie senkrecht zu einer diese Längserstreckung oder Längsachse einschließenden Mittelebene M angeordnet ist. Wischblatt 102 und Wischarm 103 sind weiterhin so angeordnet, dass der Wischarm 103 das Wischblatt 102 auf einer Teillänge überlappt und sich in der Draufsicht auf die Wischblatt-Wischarm-Anordhung 101 (Figur 7) oberhalb des Wischblattes 102 befindet.

Das Wischblatt 102 besteht in an sich bekannter Weise aus einer Wischleiste 105, die aus einem gummielastischen Material, beispielsweise durch Spritzgießen oder Pressen, hergestellt ist und mit einer sich über die gesamte Länge der Wischleiste 105 erstreckenden Trag- oder Federschiene 106 verbunden ist, beispielsweise durch Anformen an die Federschiene 106 oder auf eine andere, geeignete Weise. Die Federschiene 106 ist aus einem federnden Flachmaterial, beispielsweise aus einem Federstahlblech durch Stanzen hergestellt.

Die Wischleiste 105 ist auf ihrer Gesamtlänge so profiliert, dass sie mit einem ersten Profilabschnitt 107 über die Unterseite der mit ihren Oberflächenseiten senkrecht zur Mittelebene M angeordneten Federschiene 106 vorsteht und dort einen Kippsteg mit angeformter Wischlippe 108 bildet, mit der die Wischleiste 102 im Verwendungsfall gegen die zu reinigende Fahrzeugscheibe anliegt. Der Profilabschnitt 107 und die Wischlippe 108 sind bei der dargestellten Ausführungsform symmetrisch zur Mittelachse M ausgebildet.

Auf einer Teillänge bildet die Wischleiste 105 einen oberen Profilabschnitt 109', der sich oberhalb der Federschiene 106 befindet und sich von dem freien Ende, d.h. von dem vom Wischarm 103 nicht überlappten Ende der Wischleiste 105, bis an den Verbindungsbereich 104 erstreckt.

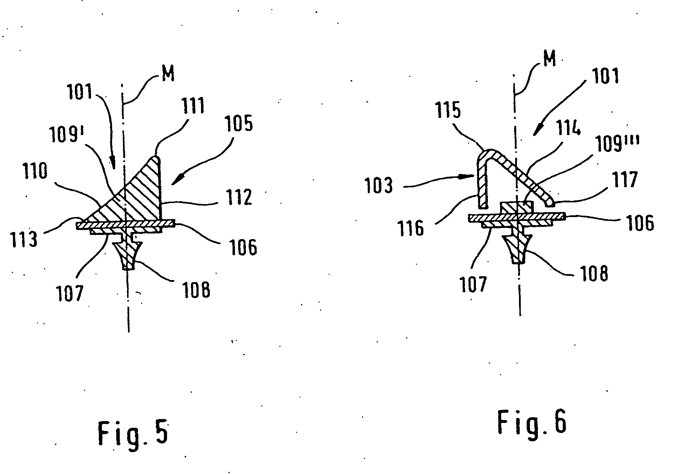

Wie insbesondere die Figur 5 zeigt, ist der Profilabschnitt 109' als Spoiler'in der Weise geformt, dass dieser Profilabschnitt an der Oberseite der Wischleiste 105 eine Spoilerfläche 110 bildet, die schräg zur Ebene der Oberflächenseiten der Federschiene 106 verläuft, und zwar ausgehend von einer oberen Spoilerkante 111 an einer Längsseite der Wischleiste 105 auf das Niveau etwa der Oberseite der Federschiene 106 an der gegenüberliegenden anderen Längsseite 113 der Wischleiste 105.

Wie insbesondere auch in der Figur 4 dargestellt ist, besitzt die Spoilerkante 111 eine sich über die Länge des Wischblattes 102 ändernde Höhe (Abstand von der Ebene der Federschiene 106) auf, und zwar in der Weise, dass diese Höhe von dem freien Ende 102' des Wischblattes 102 zur Mitte dieses Wischblattes bzw. zum Verbindungsbereich 104 hin zunimmt. Wie die Figur 5 weiterhin zeigt, besitzt der Profilabschnitt 109' eine Breite, die in etwa gleich oder geringfügig kleiner ist als die Breite der Federschiene 106.

Ab dem Verbindungsbereich 104 zu dem anderen Ende 102'' des Wischblattes 102 hin, d.h. in dem Bereich, in dem das Wischblatt 102 vom Wischarm 103 überlappt ist, weist die Wischleiste 105 einen oberen Profilabschnitt 109'' auf, der leistenartig mit einer konstanten oder im wesentlichen konstanten Höhe und Breite ausgebildet ist, allerdings mit einer Höhe und Breite, die wesentlich kleiner sind als die entsprechende Höhe und Breite des Profilabschnittes 109'.

Wie die Figur 6 besonders deutlich zeigt, ist der Wischarm 103 als ein nach unten, d.h. zum Wischblatt 102 hin, offenes Profil hergestellt, und zwar beispielsweise durch Formen aus einem Metall- oder Stahlblech derart, dass die äußere Kontur des Wischarms 103 gleich oder in etwa gleich der äußeren Kontur ist, die die Wischleiste 105 bzw. deren Profilabschnitt 109' am Verbindungsbereich 104 aufweisen. Dies bedeutet, dass der Wischarm 103 ebenfalls eine Spoilerfläche 114 bildet, die ausgehend von einer Spoilerkante 115 an einer Längsseite 116 des Wischarmes 103 schräg nach unten, d.h. in Richtung auf das Wischblatt 102 und zur anderen Längsseite 117 hin verläuft.

Am Verbindungsbereich 104 ist der Wischarm 103 mit zwei parallelen Laschen 118 ausgebildet, welche einen Teilabschnitt 109''' des Profilabschnitts 109' zwischen sich aufnehmen und in welchen der Gelenkbolzen 104' beidendig gelagert ist.

Die Anordnung ist weiterhin so getroffen, dass die Spoilerfläche 114 im wesentlichen die Fortsetzung der Spoilerfläche 110, die Längsseite 116 die Fortsetzung der Längsseite 112, die Längsseite 117 die Fortsetzung der Längsseite 113 und die Spoilerkante 115 die Fortsetzung der Spoilerkante 111 bilden. Im Verwendungsfall der Wischblatt-Wischarm-Anordnung 101 sind die Längsseiten 113 und 117 die in Fahrtrichtung des Fahrzeugs vorderen Längsseiten, so dass auch die Spoilerflächen 110 und 114 jeweils nach vorne weisen.

Während bei der dargestellten Ausführungsform der Wischarm 103 insbesondere auch in Draufsicht (Figur 7) geradlinig oder im wesentlichen geradlinig ausgebildet ist, weist das Wischblatt 102 auf seiner vom Wischarm 103 nicht überlappten Teillänge zwischen dem Ende 102' und dem Verbindungsbereich 104 eine leichte Krümmung um Achsen parallel zur Mittelachse M und senkrecht zur Längsachse L auf, und zwar derart, dass das Wischblatt 102 an der Vorderseite, d.h. an der Längsseite 113, konvex und an der Rückseite, d.h. an der Längsseite 112, konkav gekrümmt ist.

Abweichend von der beschriebenen Ausführungsform mit den Figuren 4 bis 7 ist es beispielsweise auch möglich, das Wischblatt 102 auch zwischen dem Verbindungsbereich 104 und dem Ende 102'' gekrümmt auszubilden, wobei in diesem Fall dann auch der Wischarm 103 zumindest in einem Teilbereich entsprechend gekrümmt ausgebildet ist.

Die Erfindung wurde voranstehend an Ausführungsbeispielen beschrieben.

### Bezugszeichenliste

- 1: Wischblatt
- 1', 1": Wischblattteilbereich
- 2: Wischleiste
- 3: Trag- oder Federschiene
- 4: Profilabschnitt
- 5: Unterseite des Profilabschnittes
- 6: Kippsteg
- 7: Wischlippe
- 8, 9: Längsseite
- 10: Längsnut
- 11: Adapter
- 12, 13: Abschlussstück
- 14: Oberseite
- 15: Spoiler
- 16, 16a: Spoilerrand
- 17: geneigte Spoilerfläche
- 101: Wischblatt-Wischarm-Anordnung
- 102: Wischblatt
- 102', 102'': Wischblattende
- 103: Wischarm
- 104: Verbindungsbereich
- 104': Gelenkbolzen
- 105: Wischleiste
- 106: Federschiene
- 10.7: Profilabschnitt
- 108: Wischlippe
- 109', 109'': Profilabschnitt
- 109''': Teilabschnitt
- 110: Spoilerfläche
- 111: Spoilerkante
- 112, 113: Längsseite
- 114: Spoilerfläche
- 115: Spoilerkante
- 116, 117: Längsseite
- 118: Lasche
- L: Längsachse
- M: Mittelebene

## Patentansprüche

1. Wischvorrichtung zum Reinigen von Scheiben an Fahrzeugen, insbesondere Kraftfahrzeugen, aufweisend eine Wischblatt-Wischarm-Anordnung mit einem Wischblatt (1, 102) mit einer aus einem gummielastischen Material bestehenden langgestreckten Wischleiste (2, 105), die mit einer Wischleistenunterseite bzw. mit wenigstens einer an der Wischleistenunterseite vorgesehenen Wischlippe (7, 108) an der jeweiligen Scheibe anlegbar ist und an deren Oberseite ein Spoiler (15, 110) angeformt ist und an ihren beiden Längsseiten (8, 9, 112, 113) mit einander gegenüberliegenden Längsnuten (10) versehen ist, in die jeweils eine sich in Längsrichtung (L) der Wischleiste (2, 105) erstreckende vorzugsweise federnde Tragschiene (3, 106) eingreift, sowie mit Mitteln (11) zum Befestigen des Wischblattes (1, 102) an einem zu der Wischvorrichtung gehörenden Wischarm (103) aufweist, sowie mit einem Wischarm (103), der an einem zwischen den Enden des Wischblattes (1, 102) gebildeten Verbindungsbereich (104) mit dem Wischblatt (1, 102) verbindbar bzw. verbunden ist, wobei ein Wischblattende (102'') dem Wischarm benachbart ist und das andere Wischblattende (102') vom Wischarm (103) entfernt liegt, **dadurch gekennzeichnet, daß** sich der angeformte Spoiler (15, 110) nur in einem zwischen den Befestigungsmitteln (11) und einem Ende des Wischblattes (1, 102) liegenden Wischblattbereich (1'', 109') erstreckt.

2. Wischvorrichtung nach Anspruch 1, **dadurch gekennzeichnet, daß** der Spoiler (15, 110) in Wischblattlängsrichtung (L) eine sich ändernde Höhe (h) aufweist, mit der der Spoiler (15, 110) bzw. ein Spoilerrand (16, 16a, 111) über die Ebene einer Unterseite der Wischleiste (2, 105) vorsteht.

3. Wischvorrichtung nach Anspruch 2, **dadurch gekennzeichnet, daß** die Höhe des Spoilers (15, 110) zu dem einen Ende (102') des Wischblattes (1, 102) oder der Wischleiste (2, 105) hin abnimmt.

4. Wischvorrichtung nach Anspruch 1, **dadurch gekennzeichnet, daß** der Spoiler (15, 110) eine konstante oder im wesentlichen konstante Höhe (h) besitzt.

5. Wischvorrichtung nach einem der vorhergehenden Ansprüche, wobei der an die Wischleiste angeformte Spoiler eine erste Spoilerfläche (15, 110) bildet, **dadurch gekennzeichnet, daß** der Wischarm (103) zumindest auf einer Teillänge einen Außenquerschnitt mit wenigstens einer zweiten Spoilerfläche (114) aufweist.

6. Wischvorrichtung nach Anspruch 5, **dadurch gekennzeichnet, daß** die zweite Spoilerfläche (114) die Fortsetzung der ersten Spoilerfläche (15, 110) bildet.

7. Wischvorrichtung nach Anspruch 5 oder 6, **dadurch gekennzeichnet, daß** der Wischarm (103) das Wischblatt (1, 102) auf einer Teillänge zwischen dem einen Wischblattende (102') und dem Verbindungsbereich (11, 104) überlappt.

8. Wischvorrichtung nach einem der vorhergehenden Ansprüche 5 bis 7, **dadurch gekennzeichnet, daß** sich die erste Spoilerfläche (15, 110) über die gesamte oder nahezu die gesamte Teillänge des Wischblattes (1, 102) zwischen dem Verbindungsbereich (11, 104) und dem anderen Wischblattende (102') erstreckt.

9. Wischvorrichtung nach einem der vorhergehenden Ansprüche 5 bis 8, **dadurch gekennzeichnet, daß** die erste Spoilerfläche (15, 110) von einer ersten Spoilerkante (16, 111) ausgeht, und daß die erste Spoilerkante (16, 111) eine sich in Längsrichtung des Wischblattes (1, 102) ändernde Höhe aufweist.

10. Wischvorrichtung nach Anspruch 9, **dadurch gekennzeichnet, daß** die Höhe der ersten Spoilerkante (16, 111) von dem anderen Wischblattende (102') zum Verbindungsbereich (11, 104) hin ansteigt.

11. Wischvorrichtung nach einem der vorhergehenden Ansprüche 5 bis 10, **dadurch gekennzeichnet, daß** die erste Spoilerkante (16, 16a, 111) und die zweite Spoilerkante (115) am Verbindungsbereich (11, 104) jeweils die gleiche Höhe aufweisen.

12. Wischvorrichtung nach einem der vorhergehenden Ansprüche 5 bis 11, **dadurch gekennzeichnet, daß** der Wischarm (103) am Verbindungsbereich (104) einen Profilabschnitt (109') der Wischleiste (105) übergreift, vorzugsweise gabelartig übergreift.

13. Wischvorrichtung nach einem der vorhergehenden Ansprüche 5 bis 12, **dadurch gekennzeichnet, daß** der Wischarm. (103) von einem Profil gebildet ist, welches zur Unterseite des Wischblattes (1 102) bzw. der Wischleiste (2, 105) hin offen ist.

14. Wischvorrichtung nach einem der vorhergehenden Ansprüche 5 bis 13, **dadurch gekennzeichnet, daß** die Wischleiste (2, 105) auf einer Teillänge (1'') zwischen dem einen Wischblattende. (102'') und dem Verbindungsbereich (104) eine geringere Höhe und/oder Breite besitzt als auf der Teillänge (1') zwischen dem Verbindungsbereich (104) und dem anderen Wischblattende (102').

15. Wischvorrichtung nach einem der vorhergehenden Ansprüche 5 bis 14, **dadurch gekennzeichnet, daß** zumindest das Wischblatt (102) auf einer Teillänge, vorzugsweise zumindest auf einem Teil der Länge zwischen dem Verbindungsbereich (104) und dem anderen Wischblattende (102'), an einer der Spoilerkante (111) benachbarten Längsseite (112) konkav und/oder an einer dieser Längsseite gegenüberliegenden weiteren Längsseite (113) konvex gekrümmt ist.

## Claims

1. Wiper device for cleaning windscreens of vehicles, in particular motor vehicles, having a wiper blade/wiper arm arrangement with a wiper blade (1, 102) with an elongated wiper strip (2, 105) made of a rubber material which with a wiper strip underside respectively with at least one wiper lip (7, 108) provided at the underside of the wiper strip can be put against the respective windscreen and at its upper side a spoiler (15, 110) is formed and provided at its two longitudinal sides *8, 9, 112, 113) with opposing longitudinal slots (10), in which respectively a preferably springy carrier rail (3, 106) extending in the longitudinal direction (L) of the wiper strip (2, 105) engages, and also has means (11) to secure the wiper blade (1, 102) at a wiper arm (103) belonging to the wiper device, and can also be connected respectively connected to at a connection region (104) formed between the ends of the wiper blade (1, 102), a wiper blade end (102'') adjoining the wiper arm and the other wiper blade end (102') being at a distance from the wiper arm (103), **characterised in that** the created spoiler (15, 110) only extends in a wiper blade region (1'', 109') located between the fixing means (11) and one end of the wiper blade (1, 102).

2. Wiper device according to Claim 1 **characterised in that** the spoiler (15, 110) has a varying height (h) in the longitudinal direction of the wiper blade (L) with which the spoiler (15, 110) respectively a spoiler edge (16, 16a, 11) projects above the plane of a lower side of the wiper strip (2, 105).

3. Wiper device according to Claim 2, **characterised in that** the height of the spoiler (15, 110) decreases towards the one end (102') of the wiper blade (1, 102) or the wiper strip (2, 105).

4. Wiper device according to Claim 1, **characterised in that** the spoiler (15, 110) has a constant or essentially constant height (h).

5. Wiper device according to one of the preceding claims, the spoiler created at the wiper strip forming an initial spoiler area (15, 110), **characterised in that** the wiper arm (103) has at least on one part-length an outer cross-section with at least a second spoiler area (114).

6. Wiper device according to Claim 5, **characterised in that** the second spoiler area (114) forms the continuation of the initial spoiler area (15, 110).

7. Wiper device according to Claim 5 or 6, **characterised in that** the wiper arm (103) overlaps the wiper blade (1, 102) on a part-length between the one wiper blade end (102') and the connection region (11, 104).

8. Wiper device according to one of the preceding claims 5 to 7, **characterised in that** the initial spoiler area (15, 110) extends over the full or virtually full part-length of the wiper blade (1, 102) between the connection region (11, 104) and the other wiper blade end (102').

9. Wiper device according to one of the preceding claims 5 to 8, **characterised in that** the initial spoiler area (15, 1110), starts from an initial spoiler edge (16, 111), and **in that** the initial spoiler edge (16, 11) has a height which varies in the longitudinal direction of the wiper blade (1, 102).

10. Wiper device according to Claim 9, **characterised in that** the height of the initial spoiler edge (16, 111) increases from the other wiper blade end (102') to the connection region (11, 104).

11. Wiper device according to one of the preceding claims 5 to 10, **characterised in that** the initial spoiler edge (16, 16a, 111) and the second spoiler edge (115) have the same height respectively at the connection region (11, 104).

12. Wiper device according to one of the preceding claims 5 to 11, **characterised in that** the wiper arm (103) overlaps, preferably overlaps fork-like, a profile section (109') of the wiper strip (105).

13. Wiper device according to one of the preceding Claims 5 to 12, **characterised in that** the wiper arm (103) is formed from a section, which is open towards the under side of the wiper blade (1, 102) respectively the wiper strip (2, 105).

14. Wiper device according to one of the preceding Claims 5 to 13, **characterised in that** the wiper strip (2, 105) has a lesser height and/or width on a part-length (1'') between the one wiper blade end (102'') and the connection region (104) than on the part-length (1') between the connection region (104) and the other wiper blade end (102').

15. Wiper device according to one of the preceding Claims 5 to 14, **characterised in that** at least the wiper blade (102) is concavely curved on a part-length, preferably at least on a section of the length between the connection region (104) and the other wiper blade end (102') at a longitudinal side (112) adjoining the spoiler edge (11) and/or is convexly curved at one further longitudinal side (113) opposing this longitudinal side.

## Revendications

1. Dispositif d'essuie-glace destiné à nettoyer les vitres des véhicules, en particulier des véhicules automobiles, comprenant une structure avec un balai et un bras d'essuie-glace, formée par un balai d'essuie-glace (1, 102) muni d'une raclette d'essuie-glace (2, 105) allongée, réalisée dans un matériau caoutchouc élastique, dont la face inférieure ou au moins une lèvre d'essuyage (7, 108), prévue contre la face inférieure de la raclette, peut venir en appui contre la vitre concernée et dont la face supérieure est munie d'un spoiler (15, 110) formé contre celle-ci et dont les deux faces longitudinales (8, 9, 112, 113) sont munies de rainures longitudinales (10) opposées l'une à l'autre, dans chacune desquelles entre en prise un profilé de support (3, 106), de préférence flexible, qui s'étend dans le sens longitudinal (L) de la raclette d'essuie-glace (2, 105), ainsi que par des moyens (11) pour la fixation du balai d'essuie-glace (1, 102) contre un bras d'essuie-glace (103) faisant partie du dispositif d'essuie-glace, ainsi que par un bras d'essuie-glace (103), qui peut être assemblé ou est assemblé avec le balai d'essuie-glace (1, 102) dans une zone d'assemblage (104) formée entre les extrémités du balai d'essuie-glace (1, 102), une extrémité du balai d'essuie-glace (102") étant située à proximité du bras d'essuie-glace (103) et l'autre extrémité du balai d'essuie-glace (102') étant écartée du bras d'essuie-glace (103), **caractérisé en ce que** le spoiler (15, 110) formé s'étend uniquement dans une zone du balai d'essuie-glace (1", 109') située entre les moyens de fixation (11) et une extrémité du balai d'essuie-glace (1, 102).

2. Dispositif d'essuie-glace selon la revendication 1, **caractérisé en ce que** le spoiler (15, 110) a une hauteur (h), qui varie dans le sens longitudinal (L) du balai d'essuie-glace et avec laquelle le spoiler (15, 110) ou un bord du spoiler (16, 16a, 111) s'avance en saillie au-dessus du plan d'une face inférieure de la raclette d'essuie-glace (2, 105).

3. Dispositif d'essuie-glace selon la revendication 2, **caractérisé en ce que** la hauteur du spoiler (15, 110) diminue en allant vers l'une des extrémités (102') du balai d'essuie-glace (1, 102) ou de la raclette d'essuie-glace (2, 105).

4. Dispositif d'essuie-glace selon la revendication 1, **caractérisé en ce que** le spoiler (15, 110) a une hauteur (h) constante ou sensiblement constante.

5. Dispositif d'essuie-glace selon l'une quelconque des revendications précédentes, dans lequel le spoiler, formé contre la raclette d'essuie-glace, constitue une première surface de spoiler (15, 110), **caractérisé en ce que** le bras d'essuie-glace (103) présente au moins sur une partie de la longueur une section extérieure avec au moins une deuxième surface de spoiler (114).

6. Dispositif d'essuie-glace selon la revendication 5, **caractérisé en ce que** la deuxième surface de spoiler (114) forme le prolongement de la première surface de spoiler (15, 110).

7. Dispositif d'essuie-glace selon la revendication 5 ou 6, **caractérisé en ce que** le bras d'essuie-glace (103) couvre le balai d'essuie-glace (1, 102) sur une longueur partielle entre l'une des extrémités du balai d'essuie-glace (102') et la zone d'assemblage (11, 104).

8. Dispositif d'essuie-glace selon l'une quelconque des revendications 5 à 7, **caractérisé en ce que** la première surface de spoiler (15, 110) s'étend sur toute ou pratiquement toute la longueur partielle du balai d'essuie-glace (1, 102) entre la zone d'assemblage (11, 104) et l'autre extrémité du balai d'essuie-glace (102').

9. Dispositif d'essuie-glace selon l'une quelconque des revendications 5 à 8, **caractérisé en ce que** la première surface de spoiler (15, 110) part d'un premier bord de spoiler (16, 111) et **en ce que** le premier bord de spoiler (16, 111) a une hauteur qui varie dans le sens longitudinal du balai d'essuie-glace (1, 102).

10. Dispositif d'essuie-glace selon la revendication 9, **caractérisé en ce que** la hauteur du premier bord de spoiler (16, 111) augmente en allant de l'autre extrémité du balai d'essuie-glace (102') vers la zone d'assemblage (11, 104).

11. Dispositif d'essuie-glace selon l'une quelconque des revendications 5 à 10, **caractérisé en ce que** le premier bord de spoiler (16, 16a, 111) et le deuxième bord de spoiler (115) ont chacun la même hauteur au niveau de la zone d'assemblage (11, 104).

12. Dispositif d'essuie-glace selon l'une quelconque des revendications 5 à 11, **caractérisé en ce que**, dans la zone d'assemblage (11, 104), le bras d'essuie-glace (103) s'engage, de préférence s'engage en forme de fourche, au-dessus d'une partie profilée (109') de la raclette d'essuie-glace (105).

13. Dispositif d'essuie-glace selon l'une quelconque des revendications 5 à 12, **caractérisé en ce que** le bras d'essuie-glace (103) est formé par un profilé qui est ouvert vers la face inférieure du balai d'essuie-glace (1, 102) ou de la raclette d'essuie-glace (2, 105).

14. Dispositif d'essuie-glace selon l'une quelconque des revendications 5 à 13, **caractérisé en ce que** la raclette d'essuie-glace (2, 105), sur une longueur partielle (1") entre l'une des extrémités du balai d'essuie-glace (102") et la zone d'assemblage (104), a une hauteur et/ou une largeur inférieures à celles sur la longueur partielle (1') entre la zone d'assemblage (104) et l'autre extrémité du balai d'essuie-glace (102').

15. Dispositif d'essuie-glace selon l'une quelconque des revendications 5 à 14, **caractérisé en ce qu'**au moins le balai d'essuie-glace (102) sur une longueur partielle, de préférence au moins sur une partie de la longueur entre la zone d'assemblage (104) et l'autre extrémité du balai d'essuie-glace (102'), est réalisé avec une courbure concave sur une face longitudinale (112) voisine du bord de spoiler (111) et/ou avec une courbure convexe sur une autre face longitudinale (113) opposée à ladite face longitudinale.
